# EUROPEAN PATENT APPLICATION

(11) **EP 3 026 553 A1**
(43) Date of publication of application: **01.06.2016**
(21) Application number: 14306890.6
(22) Date of filing: 26.11.2014
(51) Int. Cl.: G06F 9/455, G06F 11/36, G06F 11/34

(54) **Web browser emulator**

(71) Applicant: Hewlett-Packard Development Company, L.P., Houston, TX 77070 (US)
(72) Inventor: Hamon, Frederic, 38053 Grenoble (FR)
(74) Representative: Delumeau, François Guy

(57) **Abstract**

Examples of emulating a web browser for a system under test are disclosed. In one example implementation according to aspects of the present disclosure, a controller module emulates a plurality of virtual web browsers for a plurality of simulated users. A plurality of injector modules hosts the virtual web browsers with at least one of the plurality of injector modules being self-designating as a master injector module and the remaining plurality of injector modules being designated as slave modules. A system under test module provides web content to the virtual browsers being emulated on the plurality of injector modules.

## Description

### BACKGROUND

Users of computing devices (e.g., laptops, desktops, smartphones, tablets, etc.) utilize web browsers to view and, in some circumstances, generate website content on the internet. For example, a user may point a web browser to specific content on the internet using a web address or uniform resource locator (URL). The web browser then retrieves content from the appropriate source (e.g., web browser) and displays the content to the user on the web browser. The amount and complexity of content available to users continues to grow in complexity, which increases the amount of response time to load the content on a web browser from a particular web server.

### BRIEF DESCRIPTION OF THE DRAWINGS

The following detailed description references the drawings, in which:
FIG. 1 illustrates a block diagram of a computing system to emulate web browsers for a system under test according to examples of the present disclosure;
FIG. 2 illustrates a block diagram of a computing system to emulate web browsers for a system under test according to examples of the present disclosure;
FIG. 3 illustrates a computer-readable storage medium storing instructions to emulate web browsers according to examples of the present disclosure;
FIG. 4 illustrates a flow diagram of a method to emulate web browsers according to examples of the present disclosure; and
FIG. 5 illustrates a flow diagram of a method to emulate web browsers according to examples of the present disclosure.

### DETAILED DESCRIPTION

Web browsers often include a graphical user interface (GUI) to display content to a user of a computing device. Typically, these web browsers are developed using Web 2.0 technologies to offer a dynamic, interactive, and user-friendly web browser. The performance qualification has become very complex with clients powered by various web browsers (e.g., Chrome®, Firefox®, Internet Explorer®, etc.) on a wide range of computing devices (e.g., laptops, desktops, smartphones, tablets, etc.). Currently, Asynchronous JavaScript and XML (AJAX) may be utilized to offload a significant portion of the work that is required to generate a web page from the server to the customer's browser to create a rich internet application (RIA). By offloading the web page generation to the web browser to create an RIA, web server resources are reduced, as are response times for the user.

In some instances, the RIA supports several hundreds or thousands of users using any of a variety of types of browsers on different computing devices while maintaining an acceptable response time. Web servers hosting the RIAs are sensitive to the number of concurrent users, which degrade the web server's performance (mainly latency to respond to RIA's requests) under an excessive load. Consequently, RIAs need to be load tested to ensure that that the hundreds or thousands of concurrent users can simultaneously use the application effectively while retaining acceptable response times.

Various browsers each has its own unique performance behavior. For example, the best browser powered by a basic tablet with a slow over-the-air network connection will not provide the same user experience and response times as the same browser running on a powerful laptop with a rapid fiber network connection. A load emulator that injects realistic traffic pattern emulating events from the various browsers with a reasonable quantity of resources is needed.

Currently solutions, such as JMeter®, with existing native features and open source extensions (JMeter-Plugins), fails to emulate a complex AJAX web page or has an unrealistic response time and call-flow compared to a real web browser like Chrome® or Firefox®. Other load emulators like do not have the capability to emulate a real browser and/or handle realistic load conditions. In particular, a single monolithic engine in unable to sustain a targeted traffic load.

Various implementations are described below by referring to several examples of emulating a web browser for a system under test. In one example implementation according to aspects of the present disclosure, a controller module emulates a plurality of virtual web browsers for a plurality of simulated users. A plurality of injector modules hosts the virtual web browsers with at least one of the plurality of injector modules being self-designating as a master injector module and the remaining plurality of injector modules being designated as slave modules. A system under test module provides web content to the virtual browsers being emulated on the plurality of injector modules. Other examples are described herein.

In some implementations, the AJAX Browser Load Emulator (ABLE) is an enhancement of JMeter to emulate a real web browser with multithreading sharing cookies and cache per client session. The present ABLE architecture is designed to support a distributed deployment to benefit natively from a high scalability factor. In examples, ABLE may have the capacity to emulate efficiently hundreds or thousands of AJAX browsers with a realistic response time and hypertext transfer protocol call-flow. ABLE can be deploy in an all-in-one configuration or a cluster environment to emulate hundreds or thousands of AJAX browsers. These and other advantages will be apparent from the description that follows.

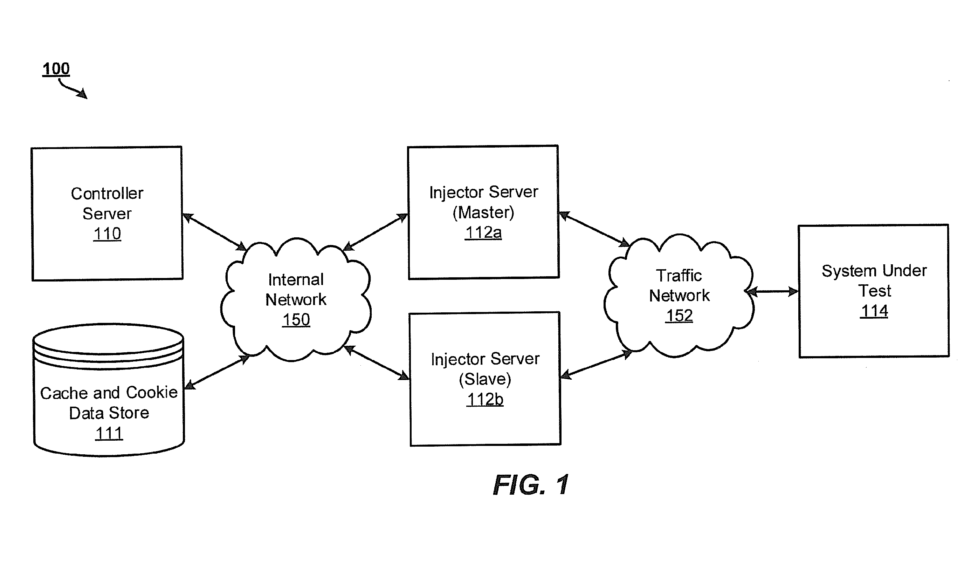

FIGS. 1-3 and 6 include particular components, modules, instructions etc. according to various examples as described herein. In different implementations, more, fewer, and/or other components, modules, instructions, arrangements of components/modules/instructions, etc. may be used according to the teachings described herein. In addition, various components, modules, etc. described herein may be implemented as instructions stored on a computer-readable storage medium, hardware modules, special-purpose hardware (e.g., application specific hardware, application specific integrated circuits (ASICs), embedded controllers, hardwired circuitry, etc.), or some combination or combinations of these.

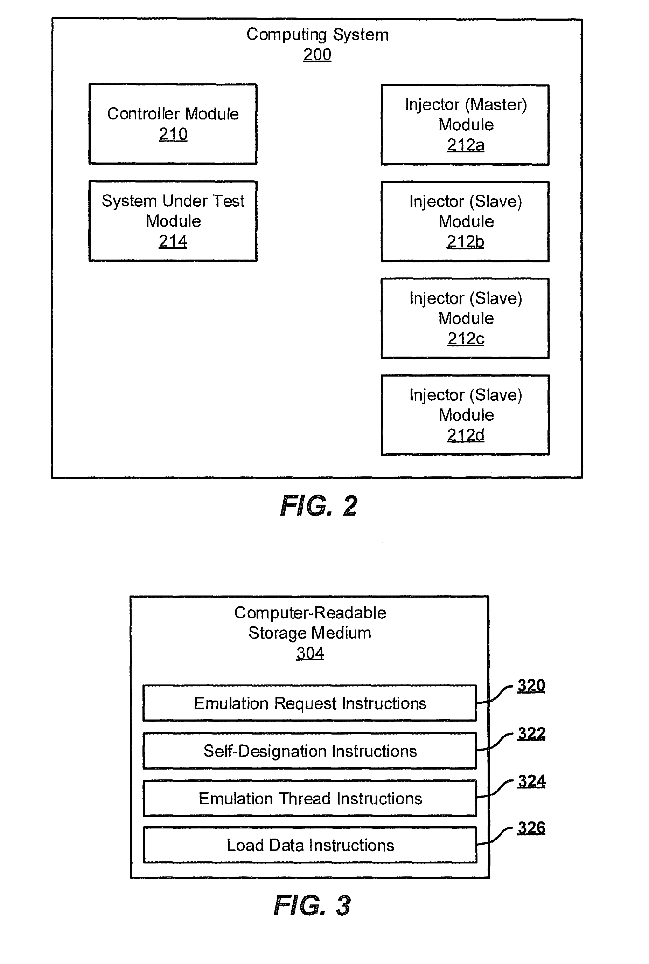

Generally, FIGS. 1-3 and 6 relate to components and modules of a computing system, such as computing system 100 of FIG. 1 and computing system 200 of FIG. 2. It should be understood that the computing systems 100 and 200 may include any appropriate type of computing system and/or computing device, including for example smartphones, tablets, desktops, laptops, workstations, servers, smart monitors, smart televisions, digital signage, scientific instruments, retail point of sale devices, video walls, imaging devices, peripherals, networking equipment, or the like.

FIG. 1 illustrates a block diagram of a computing system 100 to emulate web browsers for a system under test 114 according to examples of the present disclosure. In particular, the computing system 100 includes a controller server 110 and a cache and cookie data store 111 communicatively coupleable to an internal network 150. The computing system 100 also includes injector servers 112a,b that are communicatively coupleable to the internal network 150 and a traffic network 152, to which a system under test 114 is also communicatively coupleable. In the example shown in FIG. 1, the computing system 100 may be considered a distributed computing system such that each of the "servers" and data stores described are individual general purpose or specialized computing devices or systems. Together, these devices form the computing system 100.

Each of the controller server 110, injector servers 112a,b, and the system under test 114 may include a processing resource that represents generally any suitable type or form of processing unit or units capable of processing data or interpreting and executing instructions. The processing resource may be one or more central processing units (CPUs), microprocessors, and/or other hardware devices suitable for retrieval and execution of instructions. The instructions may be stored, for example, on a non-transitory tangible computer-readable storage medium, such as computer-readable storage medium 304 of FIG. 3 described herein, which may include any electronic, magnetic, optical, or other physical storage device that store executable instructions. Thus, the memory resource may be, for example, random access memory (RAM), electrically-erasable programmable read-only memory (EPPROM), a storage drive, an optical disk, and any other suitable type of volatile or non-volatile memory that stores instructions to cause a programmable processor to perform the techniques described herein. In examples, memory resource includes a main memory, such as a RAM in which the instructions may be stored during runtime, and a secondary memory, such as a nonvolatile memory in which a copy of the instructions is stored.

Alternatively or additionally, each of the controller server 110, injector servers 112a,b, and the system under test 114 may include dedicated hardware, such as one or more integrated circuits, Application Specific Integrated Circuits (ASICs), Application Specific Special Processors (ASSPs), Field Programmable Gate Arrays (FPGAs), or any combination of the foregoing examples of dedicated hardware, for performing the techniques described herein. In some implementations, multiple processing resources (or processing resources utilizing multiple processing cores) may be used, as appropriate, along with multiple memory resources and/or types of memory resources. In examples, one or more of the controller server 110, injector servers 112a,b, and the system under test 114 may be virtual servers.

An internal network 150 communicatively couples the controller server 110, the cache and cookie data store 111, and the injector servers 112a,b while a traffic network 152 communicatively couples the injector servers 112a,b and the system under test 114. The internal network 150 and the traffic network 152 represents generally hardware components and computers interconnected by communications channels that allow sharing of resources and information. The internal network 150 and/or the traffic network 152 may include one or more of a cable, wireless, fiber optic, or remote connection via a telecommunication link, an infrared link, a radio frequency link, or any other connectors or systems that provide electronic communication. The internal network 150 and/or the traffic network 152 may include, at least in part, an Intranet, the internet, or a combination of both. The internal network 150 and/or the traffic network 152may also include intermediate proxies, routers, switches, load balancers, and the like. The paths followed by the internal network 150 and the traffic network 152 between the various components as illustrated in FIG. 1 represent the logical communication paths between these devices, not necessarily the physical paths between the devices.

It should be appreciated that the traffic network 152 may be designed and implement to represent or otherwise function as one or more deployment networks (i.e., networks for which the system under test 114 and user devices (not shown) may connect in a real-world deployment). This enables the system under test 114 to be load tested using real-world circumstances. In examples, a property or properties of the traffic network 152 is controllable by the controller server 110 and/or by a user of the controller server 110, such as a system administrator and/or network administrator. Such properties may include bandwidth throttling, packet routing, network type, etc. For example, it may be desirable to increase or decrease a bandwidth property of the traffic network 152 and/or to route packets along a particular path to mimic a real-world network conditions.

The controller server 110 initiates a web browser emulation initiation request to initiate a web browser. The request is sent to the injection servers 112a,b. The web browser emulation provides for the emulation of web browsers to test the load on the system under test 114 to ensure the system under test 114 can satisfy and otherwise handle many user web browser sessions concurrently while maintaining satisfactory response times and reduce latency during loading of the web pages for the users.

In examples, the controller server 110 may utilize multiple injector servers such as injector servers 112a,b. In other examples, additional injector servers may be utilized. By implementing multiple injector servers, a web browser's threads may be split across multiple injector servers so that the emulation may occur concurrently. One of the injector servers, upon receiving and decoding the web browser emulation initiation request, self-designates itself as a master server (i.e., injector server (master) 112a). Meanwhile, the remaining injector servers (i.e., injector server (slave) 112b) remain slave servers to process threads for the web browser emulation.

While processing the threads for the web browser emulation, the injector servers may utilize a cache and cookie data store 111 which stores cache and cookie data relating to the web browser emulation. The injector server (master) 112a clears or not the cookies and cache according to its configuration and creates its own master thread that is sent back to the initiating user at the controller server 110. The master thread is dedicated to a user session and will distribute request orders to the injector server (slave) 112b to cause a page to be loaded. The injector server (master) 112a handles the web browser cookies, stores them in the cache and cookies data store 112, and distributes processing requests to the injector server (slave) 112b and any other slave injector servers.

In examples, any of the slave injector server has information to retrieve cookies and cache for any request and store response headers information to update the cache and cookies data store 111 before being free to process future requests. When the injector server (slave) 112b finishes a request, the injector server (slave) 112b sends a response to the injector server (master) 112a, which has, for example, the capacity to wait N number of responses corresponding to N number of requests. In examples, we browser rendering is not emulated, which improves efficiency by saving time. In this way, the computing system 100 emulates a real web browser with multithreading while sharing cookies and cache per user session.

Once the emulation is complete, the controller server 110 may generate web browser emulation load data. The web browser emulation load data may include at least a response time for the distributed emulation thread requests to be completed. In examples, the web browser emulation load data may include minimum, maximum, average, median, standard deviation, percent error, throughput, byte size, byte rate, and other relevant information.

FIG. 2 illustrates a block diagram of a computing system 200 to emulate web browsers for a system under test module 214 according to examples of the present disclosure. The computing system 200 includes a controller module 210, injector modules 212a-d, and a system under test module 214.

In examples, various components, modules, etc. described herein may be implemented as computer-executable instructions, hardware modules, special-purpose hardware (e.g., application specific hardware, application specific integrated circuits (ASICs), and the like, or some combination or combinations of these. In an example, the modules described herein may be a combination of hardware and programming instructions. The programming instructions may be processor executable instructions stored on a tangible memory resource such as a memory resource, and the hardware may include a processing resource for executing those instructions. Thus the memory resource can be said to store program instructions that when executed by the processing resource implement the modules described herein. Other modules may also be utilized as will be discussed further below in other examples. In different implementations, more, fewer, and/or other components, modules, instructions, and arrangements thereof may be used according to the teachings described herein.

The controller module 210 emulates a plurality of virtual web browsers for a plurality of simulated users. The virtual web browsers may be asynchronous javascript and extensible markup language (AJAX) web browsers and/or compatible with AJAX, for example, and/or other types of browsers.

The injector modules 212a-d represent a plurality of injector modules to host the virtual web browsers. In examples, at least one of the plurality of injector modules is self-designating as a master injector module and the remaining plurality of injector modules remain designated as slave modules. In examples, the plurality of injector modules (e.g., injector modules 212a-d) utilize threads to emulate the plurality of virtual web browsers, and the threads operate as one of stateless and stateful actors to emulate the virtual web browsers.

The system under test module 214 represents a system under test which provides web content to the virtual browsers being emulated on the plurality of injector modules. In examples, the system under test module 214 represents a web server comprising a massively parallel processor, and the plurality of injection servers represent virtual servers.

Together, these modules represent the computing system 100 of FIG. 1 and its individual server components described regarding FIG. 1. Further, as in FIG. 1, the controller module, the plurality of injector modules, and the system under test module are communicatively coupleable via a network (or networks), and at least one property of the network is controllable by the controller module 210.

FIG. 3 illustrates a computer-readable storage medium 304 storing instructions to emulate web browsers according to examples of the present disclosure. The computer-readable storage medium 304 is non-transitory in the sense that it does not encompass a transitory signal but instead is made up of one or more memory components configured to store the instructions. The computer-readable storage medium may store machine executable instructions in the form of modules such as those described regarding FIG. 2, which are executable on a computing system such as computing system 100 of FIG. 1 and/or computing system 200 of FIG. 2.

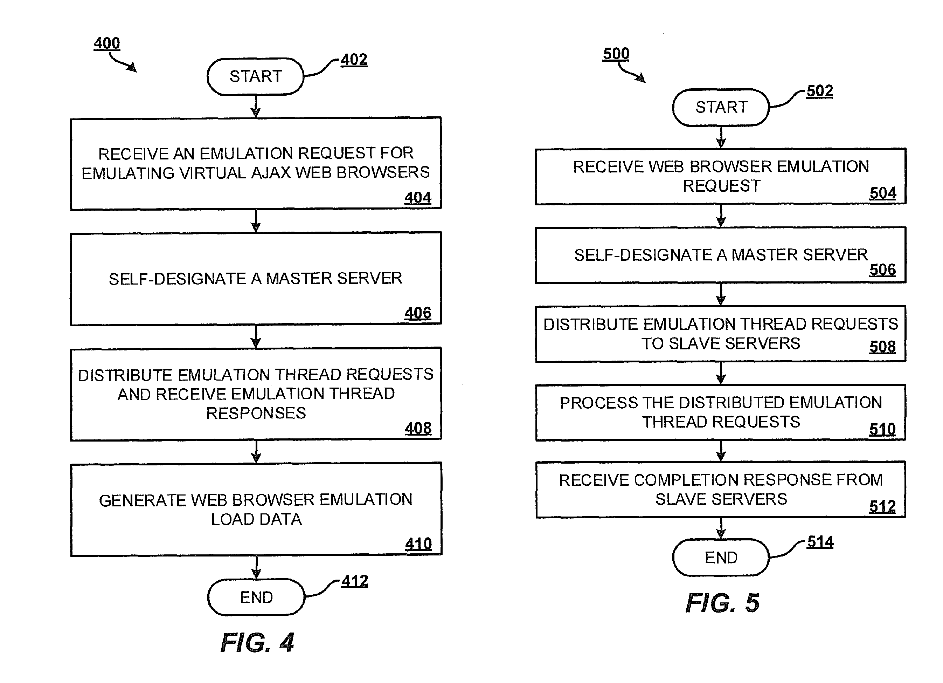

In the example shown in FIG. 3, the instructions may include emulation request instructions 320, self-designation instructions 322, emulation thread instructions 324, and load data instructions 326. The instructions of the computer-readable storage medium 304 may be executable so as to perform the techniques described herein, including the functionality described regarding the method 400 of FIG. 4. The functionality of these modules is described below with reference to the functional blocks of FIG. 4 but should not be construed as so limiting.

In particular, FIG. 4 illustrates a flow diagram of a method 400 to emulate web browsers according to examples of the present disclosure. The method 400 may be stored as instructions on a non-transitory computer-readable storage medium such as computer-readable storage medium 304 of FIG. 3 or another suitable that, when executed by a processor resource, cause the processing resource to perform the method 400. It should be appreciated that the method 400 may be executed by a computing system or a computing device such as computing system 100 of FIG. 1 and/or computing system 200 of FIG. 2.

At block 402, the method 400 begins and continues to block 404. At block 404, the method 400 includes receiving an emulation request from a controller server (e.g., controller server 110 of FIG. 1), the controller server emulating a plurality of virtual asynchronous javascript and extensible markup language (AJAX) web browsers for a plurality of simulated users for a system under test (e.g., system under test 114 of FIG. 1). In examples, the system under test is a web server comprising a massively parallel processor. The method 400 continues to block 406.

At block 406, the method 400 includes self-designating one of a plurality of injector servers (e.g., injector servers 112a,b of FIG. 1) as a master injector server (e.g., injector server (master) 112a) to distribute emulation thread requests to the other of the plurality of injector servers (e.g., injector server (slave) 112b). In examples, the plurality of servers are virtual servers operating in a distributed computing system. The method 400 continues to block 408.

At block 408, the method 400 includes distributing the emulation thread requests, such as by the injector server (master) 112a of FIG. 1, to the other of the plurality of injector servers, such as to the injector server (slave) 112b, and receiving, such as by the injector server (master) 112a, emulation thread responses from the other of the plurality of injector servers, such as from the injector server (slave) 112b, upon completion of the emulation thread requests. In examples, the emulation thread requests are at least one of a get request and a post request. In additional examples, the emulation thread requests utilize a common cache and cookie manager to manage web browser cache and web browser cookies for the plurality of virtual AJAX web browsers. The common cache and cookie manager may be, for example, the controller server 110 of FIG. 1 utilizing the cache and cookie data store 111. The method 400 continues to block 410.

At block 410, the method 400 includes generating, such as by the controller server 110 of FIG. 1, web browser emulation load data. The load data may include at least a response time for the distributed emulation thread requests to be completed. The load data may indicate how long a particular page took to load, including page latency data. The load data may include minimum, maximum, average, median, standard deviation, percent error, throughput, byte size, byte rate, and other relevant information. The method 400 continues to block 412 and terminates.

Additional processes also may be included, and it should be understood that the processes depicted in FIG. 4 represent illustrations, and that other processes may be added or existing processes may be removed, modified, or rearranged without departing from the scope and spirit of the present disclosure.

FIG. 5 illustrates a flow diagram of a method 500 to emulate web browsers according to examples of the present disclosure. The method 500 may be executed by a computing system or a computing device such as computing system 100 of FIG. 1 and/or computing system 200 of FIG. 2. The method 500 may also be stored as instructions on a non-transitory computer-readable storage medium such as computer-readable storage medium 304 of FIG. 3 that, when executed by a processing resource, cause the processing resource to perform the method 500.

At block 502, the method 500 begins and continues to block 504. At block 504, the method 500 includes receiving, by one of a plurality of slave servers (e.g., injector servers 112a,b of FIG. 1), a web browser emulation initiation request to emulate a plurality of virtual web browsers from a controller server for a system under test. It should be understood that prior to the web browser emulation initiation request being received by an injector server, each of the injector servers 112a,b are considered to be slave servers. Once the web browser emulation initiation request is received, one of the injector servers 112a,b self-designates the one of the plurality of slave servers (e.g., injector server 112a) as a master server at block 506. Additionally, the master server may manage a plurality of web browser cookies for the plurality of virtual web browsers in examples. The method 500 then continues to block 508.

At block 508, the master server (e.g. injector server (master) 112a) distributes a plurality of emulation thread requests to the plurality of slave servers (e.g., injector server (slave 112b). Additional slave injector servers may be utilized in examples. The method 500 continues to block 510.

At block 510, the plurality of slave servers processes the distributed plurality of emulation thread requests. During the processing, in examples, the slave servers may read a cache data store (e.g. the cache and cookie data store 111 of FIG. 1) and, if a cache control is exceeded, the slave servers read cookies from the data store and executes the request. The slave servers may also update the cache and cookies data store. The method 500 continues to block 512.

At block 512, the master server receives a completion response from each of the plurality of slave servers confirming completion of the processing of the distributed plurality of request orders. The method 500 continues to block 514 and terminates.

Additional processes also may be included. For example, the method 500 may include decoding, by the one of the plurality of slave servers, the web browser initiation request. In another example, the method 500 may include generating, by the controller server, web browser emulation load data, the load data including at least a response time for the distributed plurality of emulation thread requests to be completed. It should be understood that the processes depicted in FIG. 5 represent illustrations, and that other processes may be added or existing processes may be removed, modified, or rearranged without departing from the scope and spirit of the present disclosure.

It should be emphasized that the above-described examples are merely possible examples of implementations and set forth for a clear understanding of the present disclosure. Many variations and modifications may be made to the above-described examples without departing substantially from the spirit and principles of the present disclosure. Further, the scope of the present disclosure is intended to cover any and all appropriate combinations and sub-combinations of all elements, features, and aspects discussed above. All such appropriate modifications and variations are intended to be included within the scope of the present disclosure, and all possible claims to individual aspects or combinations of elements or steps are intended to be supported by the present disclosure.

## Claims

1. A computing system comprising:
a controller module to emulate a plurality of virtual web browsers for a plurality of simulated users;
a plurality of injector modules to host the virtual web browsers, at least one of the plurality of injector modules being self-designating as a master injector module and the remaining plurality of injector modules being designated as slave modules; and
a system under test module to provide web content to the virtual browsers being emulated on the plurality of injector modules.

2. The computing system of claim 1, wherein the plurality of injector modules utilize threads to emulate the plurality of virtual web browsers, and wherein the threads operate as one of stateless and stateful actors to emulate the virtual web browsers.

3. The computing system of claim 1, wherein the system under test is a web server comprising a massively parallel processor, and wherein the plurality of servers are virtual servers.

4. The computing system of claim 1, wherein the virtual web browsers are asynchronous javascript and extensible markup language (AJAX) web browsers.

5. The computing system of claim 1, wherein the rendering of the plurality of virtual web browsers is not emulated.

6. The computing system of claim 1, wherein the controller module, the plurality of injector modules, and the system under test module are communicatively coupleable via a network, and wherein a property of the network is controllable by the controller module.

7. A non-transitory computer-readable storage medium storing instructions that, when executed by a processor, cause the processor to:
receive an emulation request from a controller server, the controller server emulating a plurality of virtual asynchronous javascript and extensible markup language (AJAX) web browsers for a plurality of simulated users for a system under test;
self-designate one of a plurality of injector servers as a master injector server to distribute emulation thread requests to the other of the plurality of injector servers;
distribute the emulation thread requests to the other of the plurality of injector servers and receive emulation thread responses from the other of the plurality of injector servers upon completion of the emulation thread requests; and
generate web browser emulation load data, the load data including at least a response time for the distributed emulation thread requests to be completed.

8. The non-transitory computer-readable storage medium of claim 7, wherein the emulation thread requests are at least one of a get request and a post request.

9. The non-transitory computer-readable storage medium of claim 7, wherein the emulation thread requests utilize a common cache and cookie manager to manage web browser cache and web browser cookies for the plurality of virtual AJAX web browsers.

10. The non-transitory computer-readable storage medium of claim 7, wherein the system under test is a web server comprising a massively parallel processor.

11. The non-transitory computer-readable storage medium of claim 7, wherein the plurality of injector servers are virtual servers operating in a distributed computing system.

12. A method comprising:
receiving, by one of a plurality of slave servers, a web browser emulation initiation request to emulate a plurality of virtual web browsers from a controller server for a system under test;
self-designating, by the one of the plurality of slave servers, the one of the plurality of slave servers as a master server;
distributing, by the master server, a plurality of emulation thread requests to the plurality of slave servers;
processing, by the plurality of slave servers, the distributed plurality of emulation thread requests; and
receiving, by the master server, a completion response from each of the plurality of slave servers confirming completion of the processing of the distributed plurality of request orders.

13. The method of claim 12, further comprising:
decoding, by the one of the plurality of slave servers, the web browser initiation request.

14. The method of claim 12, wherein the master server manages a plurality of web browser cookies for the plurality of virtual web browsers.

15. The method of claim 12, further comprising:
generating, by the controller server, web browser emulation load data, the load data including at least a response time for the distributed plurality of emulation thread requests to be completed.
